# EUROPÄISCHE PATENTSCHRIFT

(11) **EP 2 002 140 B1**
(45) Veröffentlichungstag und Bekanntmachung des Hinweises auf die Patenterteilung: **17.03.2010**
(21) Anmeldenummer: 07723619.8
(22) Anmeldetag: 27.03.2007
(51) Int. Cl.: F16D 55/46, F16D 65/21

(54) **SELBSTVERSTÄRKENDE SCHEIBENBREMSE UND VERFAHREN ZU DEREN ANSTEUERUNG**
SELF-ENERGISING DISK BRAKE AND METHOD FOR THE CONTROL THEREOF
FREIN À DISQUE À AUTO-AMPLIFICATION ET PROCÉDÉ DE COMMANDE DE CELUI-CI

(30) Priorität: 28.03.2006 DE 102006014271; 29.06.2006 DE 102006029944
(43) Veröffentlichungstag der Anmeldung: 17.12.2008
(73) Patentinhaber: KNORR-BREMSE Systeme für Nutzfahrzeuge GmbH, 63512 Hainburg (DE)
(72) Erfinder: SEIDENSCHWANG, Matthias, 80637 München (DE); TRIMPE, Robert, 82234 Wessling (DE); BAUMGARTNER, Johann, 85368 Moosburg (DE); GEISSLER, Steffen, 63512 Hainburg (DE)
(74) Vertreter: Mattusch, Gundula
(86) Internationale Anmeldenummer: PCT/EP2007/002673
(87) Internationale Veröffentlichungsnummer: WO 2007/112881

(56) Entgegenhaltungen:
- WO-A-03/071150
- WO-A-2005/031184
- DE-A1-102005 030 618

## Beschreibung

Die Erfindung betrifft eine selbstverstärkende Scheibenbremse nach dem Oberbegriff des Anspruchs 1 und ein Verfahren zu deren Ansteuerung.

Es ist bekannt, selbstverstärkenden Scheibenbremsen einen Elektromotor als Aktuator und eine Rechnereinheit zur Steuerung/Regelung zuzuordnen, um dem Hauptproblem dieser Bremsenbauart, der Verstärkung von Reibwertschwankungen, entgegenzuwirken.

Die Erfindung befasst sich mit selbstverstärkenden Scheibenbremsen der Bauart, bei denen das Betätigungselement unabhängig von den Verstärkungselementen auf den Bremsbelag einwirkt. Eine typische Bauart ist z.B. in DE 101 56 348 C1 beschrieben. Bei dieser Bauart wirkt das Betätigungselement in Umfangsrichtung auf den Bremsbelag, womit die Betätigung nur mittelbaren Einfluss auf die erzeugte Spannkraft hat. Diese Betätigungsart ergibt eine bessere Regelbarkeit und Beeinflussbarkeit der wirksam werdenden Selbstverstärkung als dies bei Bremsen der Fall ist bei denen die Betätigung unmittelbar auf den Bremsbelag wirkt.

Die bekannten Bremsen dieser Bauart sind z.T. auch mit Verschleiß - Nachstellsystemen ausgestattet. Das Nachstellsystem ist jedoch in diesen Konstruktionen so angeordnet, dass die gesamte Aktuatorik der Bremse einschließlich zumindest von Teilen der Betätigungseinrichtung, der Nachstellvorrichtung sowie des Selbstverstärkungsmechanismus verschoben werden muss.

In DE 103 28 244 A1 ist eine selbstverstärkende Scheibenbremse beschrieben bei welcher die Betätigung mittels einer Aktuatorspindel unmittelbar auf den Bremsbelag einwirkt. Diese Bremse ist ebenfalls mit einem Verschleißnachstellsystem ausgestattet, wobei in einer Ausführungsvariante der beschriebenen Konstruktion der Antriebsmotor des Bremsaktuators mittels eines schaltbaren Verteilgetriebes auch zum Antrieb des Nachstellsystems verwendet wird. Auch bei dieser Ausführungsart einer selbstverstärkenden Scheibenbremse muss eine die gesamte Länge des Bremsbelages überspannende Aktuatorstützplatte in einem Außengewinde verstellt werden. Aufgrund des großen Durchmessers des Gewindes ist diese Gewindeverstellung mit einem sehr schlechten Wirkungsgrad behaftet, was jedoch für den ausschließlichen Zweck der Verschleißnachstellung nicht von Bedeutung ist.

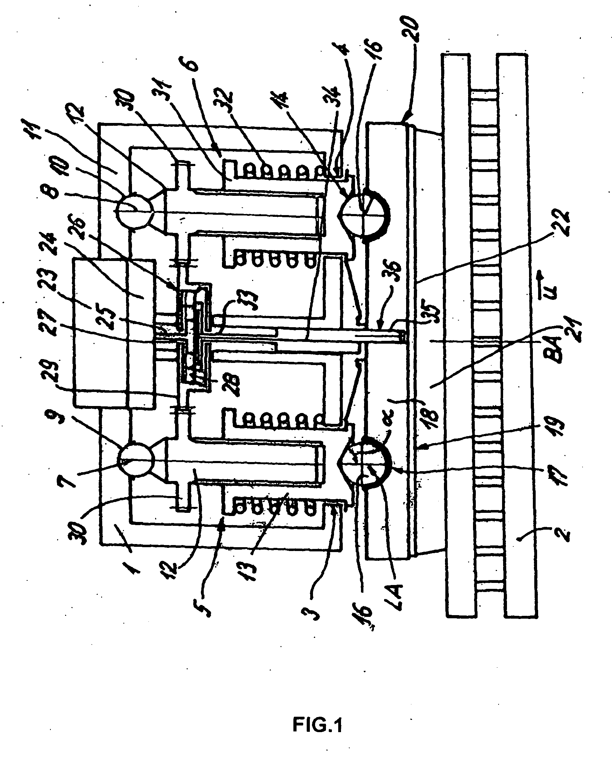

Die nicht vor veröffentlichte DE 10 2005 030 618.7zeigt eine selbstverstärkende Scheibenbremse mit Umfangsbetätigung des Bremsbelages welche ein Verschleißnachstellsystem aufweist, bei dem die Verschleißnachstellung vom Antriebsmotor der Betätigungseinrichtung über ein schaltbares Verteilgetriebe betätigt wird. Die Verstellbewegung der Nachstelleinrichtung erfolgt dabei unmittelbar an den als Schraubsystem ausgeführten längenveränderlichen Bremsstempeln. Diese Konstruktion ist beispielhaft in Fig.1 dargestellt.

WO-A-03/071150 zeigt eine Scheibenbremse gemäß dem Oberbegriff des Anspruchs 1.

Ein grundlegendes Problem aller beschriebenen Bauarten der selbstverstärkenden Scheibenbremsen ist, dass an das Löseverhalten der Bremse im Betriebs - und im Parkbremsfall konträre Anforderungen gestellt werden müssen.

Die gewünschten Betriebszustände sind:
1. Der Betriebsbremsfall
   Bei passivem Aktuator ( also im stromlosen Zustand z.B. bei Ausfall der Stromversorgung während einer Bremsung ) soll die Bremse unmittelbar selbsttätig lösen, um instabile Fahrzustände zu vermeiden und das Fahrzeug betriebfähig zu halten.
2. Der Parkbremsfall
   Bei eingelegter Parkbremse soll deren Haltewirkung mit rein mechanischen Mitteln (d.h. im stromlosen Zustand ) aufrechterhalten werden.

Diese entgegengesetzten Anforderungen lassen sich bei den bekannten Konstruktionen nur durch aufwendige und störanfällige Verriegelungssysteme oder zusätzliche Selbstlösemechanismen erfüllen.

Hinzu kommt, dass die Zuspannung der Bremsen über das Keilsystem eine Fahrtrichtungsabhängigkeit der Bremswirkung hervorruft.

Dieses Problem soll bei den bekannten Konstruktionen dadurch gelöst werden, dass die Bremsen der verschiedenen Achsen des Fahrzeuges im Parkbremsfall in unterschiedliche Richtungen aktiviert werden. D.h. zur Erzielung einer unter allen Bedingungen ausreichenden Haltewirkung müssen mindestens die Bremsen zweier Achsen zugespannt werden. Dabei werden dennoch im kritischen Fall des Haltens an einer Steigung nur die Bremsen der Achse voll wirksam an der aufgrund der gewählten Betätigungsrichtung der Bremse die Selbstverstärkung hervorgerufen wird.

Insgesamt erscheint die Realisierung der Parkbremse über das Selbstverstärkungssystem problematisch, da erst eine Bewegung des Fahrzeuges eintreten muss um die gewünschte Haltewirkung zu erzielen.

Es soll für gattungsgemäße Scheibenbremsen, insbesondere für solche nach Art der Fig.1, eine robuste und zuverlässige Parkbremse realisiert werden, bei der die geforderte Haltewirkung ohne Richtungsabhängigkeit erzielt wird und bei welcher der Widerspruch in den Anforderungen an das Löseverhalten im Betriebsbrems- und Parkbremsfall aufgelöst wird.

Die Erfindung löst diese Aufgabe durch den Gegenstand des Anspruchs.

Vorteilhafte Ausgestaltungen sind in den Unteransprüchen angegeben.

Nach Anspruch 1 ist der Antriebsstrang zwischen dem verzweigenden Getriebe und der Bremsbelageinheit über die erste Zuspannvorrichtung nicht selbsthemmend ausgelegt und der Abtriebsstrang zwischen dem verzweigenden Getriebe und der Bremsbelageinheit über die zweite Zuspannvorrichtung ist selbsthemmend ausgelegt.

Die o.a. Aufgabenstellung lässt sich bei der Bremsenbauart der Fig.1 zudem auf überraschend einfache Weise lösen, indem das Verschleißnachstellsystem auf besonders einfache Weise zur Realisierung der Parkbremsfunktion verwendet wird.

Der Antriebsmotor der ersten Zuspannvorrichtung bzw. des Betriebsbremsaktuators wird bei dieser Bremse mittels eines verzweigenden Getriebes auch als Antrieb des Nachstellsystems genutzt.

Die Nachstell-Bremsstempel mit Spindel und Mutter sind zur Übertragung der gesamten Zuspannkraft dimensioniert und der Antriebsmotor muss bereits für den Betriebsbremsfall so leistungsstark ausgelegt sein, dass er auch über die Spindelbetätigung bei verminderter Stellgeschwindigkeit ausreichend hohe Spannkräfte erzeugen kann.

Die Bremsbelageinheit umfasst zumindest den Bremsbelag und ggf. eine Druckplatte oder weitere Elemente.

Um die Parkbremse zu realisieren, genügt es also das verzweigende Getriebe zur Übertragung höherer Kräfte auszulegen und die Steigung der Gewindespindeln anzupassen.

Bei zugespannter Parkbremse wird die Haltewirkung allein durch Reibung der selbsthemmenden Bremsstempel mit Spindel und Mutter erzeugt.

Eine Fahrtrichtungsabhängigkeit der Haltewirkung besteht nicht da das Selbstverstärkungssystem beim Zuspannen der Parkbremse unwirksam gemacht wird.

Es kann jedoch der Effekt erzielt werden, dass in dem Fall wo die Hangabtriebskraft des Fahrzeuges die Haltewirkung der Bremse mit reiner Spindelzuspannung übersteigt, bei einer Bewegung des Fahrzeuges eine zusätzliche Spannkraft über Selbstverstärkung hervorgerufen wird.

In ihrem Löseverhalten beeinflussen sich Betriebs- und Parkbremse jedoch nicht. Es ist somit möglich die Betriebsbremse sicher selbstlösend und die Parkbremse sicher rein mechanisch haltend auszuführen.

Der Übergang von einem Betriebsbremszustand auf einen Parkbremszustand kann mit geringem Aufwand realisiert werden. Dies geschieht dadurch, dass im Fall einer Parkbremsung gleichzeitig ohne Eintreten einer nennenswerten Spannkraftminderung die Kurbel in ihre Neutralposition zurückbewegt wird und nachfolgend durch Zuspannen der Bremsstempel mit Spindel und Mutter die erforderliche Parkbremskraft aufgebaut wird.

Dieser Vorgang könnte bei sehr großen Keilwinkeln kontinuierlich erfolgen. In diesem Fall würde bei Öffnen der Magnet-Haltebremse bei noch drehendem Elektromotor über das Verteilgetriebe ein zusätzliches Zuspannen der Bremsstempel mit Spindel und Mutter durch die zurücklaufende Kurbel erfolgen.

In der Praxis werden die anwendbaren Keilwinkel jedoch deutlich kleiner sein als für den oben beschriebenen Vorgang notwendig. Es zeigt sich jedoch, dass auf einfache Weise der Übergang von Betriebs- auf Parkbremse durch einen mehrmaligen Wechsel von Spindelzuspannung und Lösen der Kurbel erzielt werden kann. Hierbei wird erst die Spannkraft durch Spindelzuspannung um einen möglichen Betrag bei gehaltener Kurbelposition erhöht und anschließend bei gehaltener Spindelposition die Kurbel gerade soweit gelöst dass die vorherige Spannkraft nicht oder nicht nennenswert unterschritten wird. Dieser Vorgang wird wiederholt bis die Kurbel ihre Neutralposition erreicht hat. Dann erfolgt der endgültige Spannkraftaufbau über die Bremsstempel mit Spindel und Mutter.

Beschreibung eines Parkbremsvorganges ohne vorherige Betriebsbremsung:
1. Der Fahrer gibt durch Betätigung des Handbremshebels seinen Parkbremswunsch vor.
2. Die Blockiereinrichtung, insbesondere die Magnethaltebremse, wird durch das Bremssystem aktiviert und blockiert den Kurbelantrieb
3. Der Elektromotor wird in Zuspanndrehrichtung entsprechend Vorwärtsfahrt angesteuert.
4. Die Bremsstempel mit Spindel und Mutter werden bis zum Erreichen der geforderten Spannkraft betätigt.
5. Die Blockiereinrichtung, insbesondere die Magnethaltebremse, wird durch das Bremssystem gelöst
6. Das Halten der Parkbremse erfolgt stromlos über die selbsthemmende Wirkung der Gewindespindeln.
7. Der Fahrer gibt durch Betätigung des Handbremshebels seinen Lösewunsch vor.
8. Die Blockiereinrichtung, insbesondere die Magnethaltebremse, wird durch das Bremssystem aktiviert und blockiert den Kurbelantrieb
9. Der Elektromotor wird in Lösedrehrichtung angesteuert.
10. Die Bremsstempel mit Spindel und Mutter werden in die Ausgangsstellung zurückgedreht
11. Die Blockiereinrichtung, insbesondere die Magnethaltebremse, wird durch das Bremssystem gelöst.

Beschreibung eines Parkbremsvorganges nach vorheriger Betriebsbremsung und gehaltener Betriebsbremsstellung:
1. Der Fahrer gibt bei betätigter Betriebsbremse durch Betätigen des Handbremshebels seinen Parkbremswunsch vor
2. Die Blockiereinrichtung, insbesondere die Magnethaltebremse, wird durch das Bremssystem aktiviert und blockiert den Kurbelantrieb
3. Der Elektromotor wird in Zuspanndrehrichtung entsprechend Vorwärtsfahrt angesteuert
4. Die Bremsstempel mit Spindel und Mutter werden bis zum Erreichen einer vorgegebenen Teilspannkraft und/oder um eine bestimmte Anzahl von Motorumdrehungen betätigt.
5. Die Blockiereinrichtung, insbesondere die Magnethaltebremse, wird durch das Betriebsbremssystem gelöst
6. Der Elektromotor wird in Löserichtung angesteuert
7. Die Kurbel wird bis zum Erreichen einer bestimmten Spannkraftminderung und/oder um eine bestimmte Anzahl von Motorumdrehungen zurückgedreht.

Der Vorgang 2. bis 7. wird nun solange wiederholt bis die Kurbel ihre Neutralposition erreicht hat. Dann erfolgt der weitere Ablauf 2. bis 11. wie für den Parkbremsvorgang ohne vorherige Betriebsbremsung beschrieben.

Bei einem mehrachsigen Fahrzeug kann der Übergang von Betriebsbremse auf Parkbremse vorteilhaft so ausgeführt werden, dass einzelne Bremsen bzw. die Bremsen einzelner Achsen die beschriebenen Schritte 2 bis 6 versetzt zueinander ausführen. Z.B. die Vorderachsbremsen beginnen mit Schritt 2. Wenn die VA - Bremsen Schritt 5. ausführen beginnen die HA Bremsen mit Schritt2. Auf diese Weise wird erreicht, dass einem geringen Lösen der Bremsen der einen Achse eine Spannkrafterhöhung der Bremsen der anderen Achse gegenübersteht.

Nachfolgend wird die Erfindung unter Bezug auf die Zeichnung anhand von Ausführungsbeispielen näher beschrieben. Es zeigen:
- Fig. 1: eine Skizze, welche nach Art einer Schnittansicht den prinzipiellen Aufbau einer selbstverstärkenden Scheibenbremse mit einem Nachstellsystem für Belagverschleiß veranschaulicht;
- Fig. 2: eine als Schnittansicht gehaltene Skizze einer selbstverstärkenden Scheibenbremse;
- Fig. 3: eine erste Schnittansicht durch eine erfindungsgemäße Scheibenbremse;
- Fig. 4: eine Ausschnittsvergrößerung aus Fig. 3;
- Fig. 5: eine teilgeschnittene Ansicht der Scheibenbremse der Fig. 3 und 4;
- Fig. 6: eine gegenüber Fig. 3 um 90° gedrehte Schnittansicht durch die Scheibenbremse der Fig. 3;
- Fig. 7 bis 9: Diagramme zur Veranschaulichung des Verhaltens erfindungsgemäßer Scheibenbremsen im Betrieb.

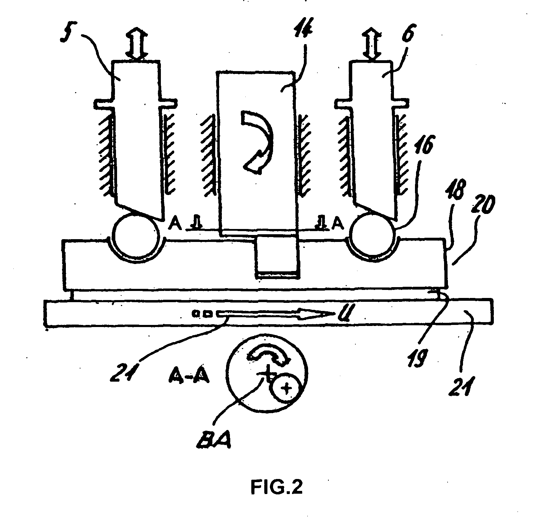

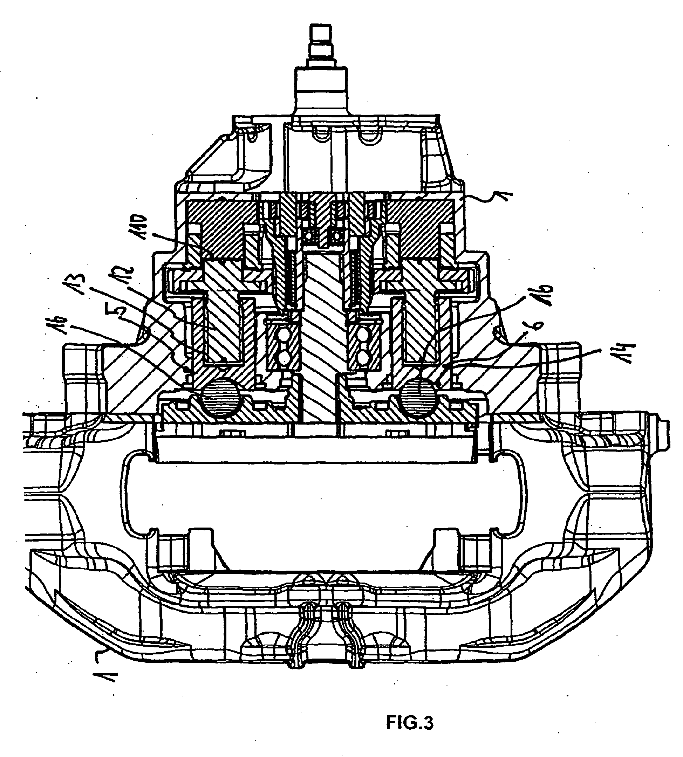

Nachfolgend sei zunächst zur Erleichterung des Verständnisses die eigene ältere, noch nicht veröffentlichte, Konstruktion der DE 10 2005 030 618.7 unter Bezug auf Fig.1 und 2 beschrieben, da diese Beschreibung das Verständnis der Konstruktion der Fig. 3 erleichtert, die auf der Konstruktion der Fig. 1 aufbaut und diese verbessert.

Bevorzugt bauen die erfindungsgemäßen Scheibenbremsen auf einem Festsattelkonzept auf, bei dem ein ein- oder mehrteiliger Bremssattel 1 (auch Bremsengehäuse genannt) relativ zu einer Bremsscheibe 2 unbeweglich an einer Radachse befestigt ist.

Basis der nachfolgend beschriebenen Konzepte ist insofern vorzugsweise eine Festsattelbremse mit zumindest äußerer - reaktionsseitiges - elektromechanisch betätigter und elektronisch geregelter Verschleißnachstellung, die von einer zuspannseitigen Verschleißnachstellung mit Hilfe der Bremsstempel ergänzt werden kann, wenn diese zu diesem Zweck genutzt werden.

Das Wirkprinzip und die beschriebenen Merkmale sind prinzipiell auch für andere Bremsenbauarten, wie z.B. Schiebesattel- oder Schwenksattelbremsen, anwendbar. Lediglich der die Bremsbetätigung beinhaltende Sattelkopf der mechanisch/pneumatisch betätigten Basisbremse wird ersetzt durch die elektromechanischer Zuspanneinheit mit Selbstverstärkung.

Eine Festsattelbremse mit pneumatisch betätigter Zuspanneinrichtung dieser Art zeigen z.B. die DE 36 10 569 A1, die DE 37 16 202 A1 oder die EP 0 688 404 A1. Eine Festsattelbremse mit elektromotorischer Nachstellung zeigt die WO 02/14 708 A1. Derartige elektromotorische Nachtstelleinrichtungen können bei der vorgeschlagenen Ausführungsbeispielen - wenn gewünscht - jeweils zumindest reaktionsseitig angeordnet werden.

In Fig. 1 ist der Bremssattel 1 lediglich in seinem zuspannseitigen Bereich angedeutet. In der Praxis umgreift er vorzugsweise rahmenartig den oberen Umfangsbereich der Bremsscheibe und ist an einem (hier nicht zu erkennenden Achsflansch) befestigt. Eine Schnittansicht durch eine erfindungsgemäße Scheibenbremse zeigt Fig. 3.

Nach Fig.1 weist der Bremssattel 1 an seiner der Bremsscheibe 2 mit einer Bremsscheibendrehachse zugewandten Seite eine oder mehrere, vorzugsweise zwei Öffnungen 3, 4 und eine korrespondierende Anzahl von Bremsstempeln 5, 6 (hier zwei) auf, die parallel zur Bremsscheibenachse BA ausgerichtet sind.

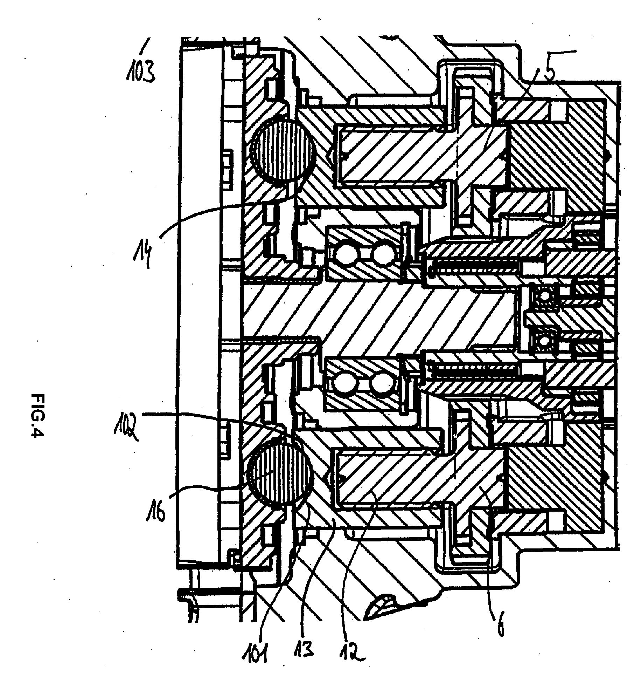

Nach Fig. 1 bis 4 sind jeweils zwei längenveränderliche Bremsstempel 5, 6 parallel zueinander angeordnet.

Die beiden Bremsstempel 5, 6 bzw. Nachstellkolben stützen sich jeweils direkt oder über zwischengeschaltete Elemente; hier Gleitlagerschalen 9, 10; an der bremsscheibenabgewandten Rückwand 11 des Bremssattels ab. Als Lagereinrichtungen werden vorzugsweise Kugeln, 7, 8 mit Gleitlagerschalen 9 eingesetzt.

Die Lagereinrichtungen sind derart ausgelegt, dass sie eine Drehung der Bremsstempel 5, 6 bzw. Nachstellkolben um ihre eigene Längsachse LA erlauben.

Dabei sind jeweils im Bremsstempel 5, 6 und im Bremssattel kugelsegmentartige (kalottenartige) Ausnehmungen ausgebildet, von denen in eine (hier in die im Bremssattel) die Gleitlagerschalen 9, 10 eingesetzt ist, so dass sich die Kugeln 7, 8 relativ zur Gleitlagerschale drehen können.

Alternativ können die Kugeln 7, 8 auch als kugelförmige Ansätze an den zum Bremssattel gewandten Enden der Bremsstempel 5, 6 ausgebildet sein (hier nicht dargestellt), die dann in korrespondierende Ausnehmungen im Bremssattel mit Gleitlagerschalen eingreifen.

Denkbar sind anstelle der Kugeln und Ausnehmungen auch ebene Gleitlager 110 oder ringförmige Lager oder dgl. (Fig. 3).

Die Bremsstempel 5, 6 weisen jeweils eine mit einem Außengewinde versehene Spindel 12 auf, auf der eine hülsenartige Mutter 13 mit einem korrespondierenden Innengewinde verdrehbar angeordnet ist. Dieses Gewinde kann je nach Auslegung nicht selbsthemmend oder selbsthemmend sein.

Die Muttern 13 weisen an ihrer von der Bremsscheibe abgewandten Seite einen Flansch 31 auf, wobei zwischen dem Flansch 31 und der Innenwandung des Bremssattels 1 jeweils Druckfedern 32 wirken, welche die Mutter 13 konzentrisch umfassen und auf den Flansch eine vorgegebene Kraft ausüben bzw. den Flansch 31 relativ zur Bremssattel-Innenwandung vorspannen.

Alternativ wird die gesamte Mechanik gegen die Druckplatte verspannt.

Nach Fig. 1 bis 4 ist die Mutter 13 jedes Bremsstempels 5, 6 an der zur Bremsscheibe zugewandten Seite angeordnet und die Spindel 12 an der zum Bremssattelinneren gewandten Seite. Eine umgekehrte Anordnung wäre auch denkbar (hier nicht dargestellt).

Durch Verschrauben der Mutter 13 auf der Spindel kann die axiale Länge jedes einzelnen derart ausgebildeten Bremsstempels 5, 6 - beispielsweise zum Ausgleich von Bremsbelagverschleiß und beim Anlegen der Beläge an die Bremsscheibe 2 - verstellt werden.

An ihrer der Bremsscheibe zugewandten Seite, also an ihren Druckflächen, sind die Bremsstempel 5, 6, hier die Muttern 13, jeweils mit einer rampenartigen Ausnehmung oder Kontur 14 versehen, deren tiefste Stelle vorzugsweise im Bereich der Längsachse der Bremsstempel liegt.

Es ist denkbar, mehrere Konturen vorzusehen und die Bremsstempel 5, 6 drehbar auszulegen, was hier nicht realisiert ist.

In die Ausnehmungen 14 greifen jeweils Rollkörper 16 ein, die hier in bevorzugter Ausgestaltung als Kugeln 16 ausgebildet sind. Alternativ wären nach einer alternativen Ausführungsform auch z.B. zylindrische oder auf sonstige Weise geformte Rollkörper (z.B. Tonnen) denkbar, die dann z.B. auf einer rinnenartigen Ausnehmung in den Bremsstempeln abrollen würden.

Die Rollkörper 16 greifen an ihren von der Bremsscheibe abgewandten Seiten in je nach Ausgestaltung der Rollkörper ausgebildete, hier kalottenförmige Gleitlagerschalen 17, die in Ausnehmungen korrespondierender Formgebung in einer Druckplatte 18 eingesetzt sind, die an der Trägerplatte 19 eines zuspannseitigen Bremsbelages 20 mit Bremsbelagmaterial 21 anliegt, der im Bremssattel 1 parallel zur Bremsscheibendrehachse BA und in Umfangsrichtung U (bzw. Tangential bzw. parallel zur Tangentialen) relativ zur Bremsscheibe 2 beweglich angeordnet ist.

Eine Klammerfeder 22 zwischen Druckplatte 18 und Muttern 13 hält die Druckplatte 18 unter Vorspannung an den Muttern 13. Alternativ ist es auch denkbar, die Druckplatte auf andere Weise, z.B. am Gehäuse (Sattel) zu verspannen).

Zum Antrieb der Bremse dient ein elektrischer Antriebsmotor 23, dem vorzugsweise ein Untersetzungsgetriebe 24 nachgeordnet ist, dessen Abtriebswelle 25 auf ein weiteres Getriebe 26, insbesondere ein Planetengetriebe wirkt, das mittig zwischen den Bremsstempeln mit Spindel und Mutter angeordnet ist.

Dabei treibt die Abtriebswelle 25 ein Sonnenrad 27 des Planetengetriebes 26, welches Planetenräder 28 mitnimmt. Die Planetenräder 28 kämmen (hier nicht detailliert dargestellt) mit dem Sonnenrad 27 und einem innen- und außenverzahnten Ring 29. Je nach Schaltzustand (Schaltbarkeit hier nicht dargestellt) setzen sie entweder den Planetenstern 33 oder den Ring 29 in Drehung. Der Ring 29 kämmt mit seiner Außenverzahnung mit Zahnrädern 30, die auf die Spindeln 12 aufgesetzt oder an diese angeformt sind.

Zum selbsttätigen Umschalten des Antriebs (z.B. ein Elektromotors) kann ein federbelasteter Kugelrastmechanismus vorgesehen sein (hier nicht dargestellt). Der Umschaltvorgang kann auch auf andere Weise realisiert werden (z.B. elektromagnetisch).

In axialer Verlängerung des Planetensterns 33 ist eine hier zylindrisch ausgebildete und parallel zur Bremsscheibenachse angeordnete Kurbel 34 vorgesehen, die an ihrer zur Bremsscheibe 2 gewandten Seite mit einem außermittig (exzentrisch) ausgebildeten, ebenfalls parallel zur Bremsscheibenachse BA parallel ausgerichteten Kurbelzapfen 35 in eine korrespondierende Öffnung 36 in einer Bremsbelageinheit eingreift, wobei die Öffnung 36 die z.B. einen zum Querschnitt des Kurbelzapfens 35 korrespondierenden Querschnitt aufweist oder aber z.B. kulissen- , insbesondere langlochartig ausgebildet ist (hier z.B. senkrecht zur Bildebene).

Die Kurbel 34 bzw. der Kurbeltrieb 35, 36 bildet eine erste Zuspannvorrichtung und die Bremsstempel 5, 6 bilden eine zweite Zuspanneinrichtung und können auch als Verschleißnachstelleinrichtungen genutzt werden.

Im Ausführungsbeispiel der Fig. 1 besteht die Betätigungseinrichtung bzw. Zuspanneinheit aus den zwei, zum Zwecke der Verschleißnachstellung längenveränderlichen Nachstellkolben bzw. Bremsstempeln 5, 6, welche in ihrer der Bremsscheibe 2 zugewandten Druckfläche die Ausnehmungen 14 nach Art von Rampenkonturen aufweisen, an denen die Rollkörper 16 ablaufen, welche die von der Bremse erzeugte Zuspannkraft auf die Bremsbelageinheit bzw. auf die auf den Bremsbelag aufliegende Druckplatte übertragen.

In der Druckfläche der Bremsbelageinheit bzw. der Druckplatte 18 sind die Rollkörper 16 über ein entgegengesetzt gestaltetes Rampenprofil (hier nicht dargestellt) oder (bevorzugt, da die Rollkörper besonders sicher geführt sind; hier dargestellt) in dem Gleitlagerbett (Gleitlagerschalen 17) aufgenommen.

Die Bremsbelageinheit, hier bestehend aus der ein- oder mehrteiligen Kombination von Bremsbelag 20 und Druckplatte 18, wird federnd so gegen die Bremsstempel und Nachstellkolben 5, 6 gedrückt, dass die dazwischen angeordneten Rollkörper 16 zwischen der Bremsbelageinheit und den Bremsstempel elastisch eingespannt sind.

Die Betätigung der Bremse erfolgt nach einem Anlegevorgang des Bremsbelages 20 an die Bremsscheibe durch ein Verschieben der Druckplatte nebst Bremsbelag 20 parallel zur Reibfläche der Bremsscheibe in Drehrichtung bzw. Umfangsrichtung derselben.

Diese Verschiebung wird vorzugsweise durch den Kurbeltrieb 35, 36 bewirkt, der mit einem Abtriebs- und hier Kurbelzapfen 35 etwa mittig an der Druckplatte 18 der Bremsbelageinheit 18, 20 angreift und parallel zur Rotationsachse der Bremsscheibe im Zuspanngehäuse - Bremssattel - 1 gelagert wird.

Die Betätigung des Kurbeltriebes erfolgt über den elektrischen Antrieb, z.B. den Elektromotor 23 mit nachgeschaltetem Getriebe 24.

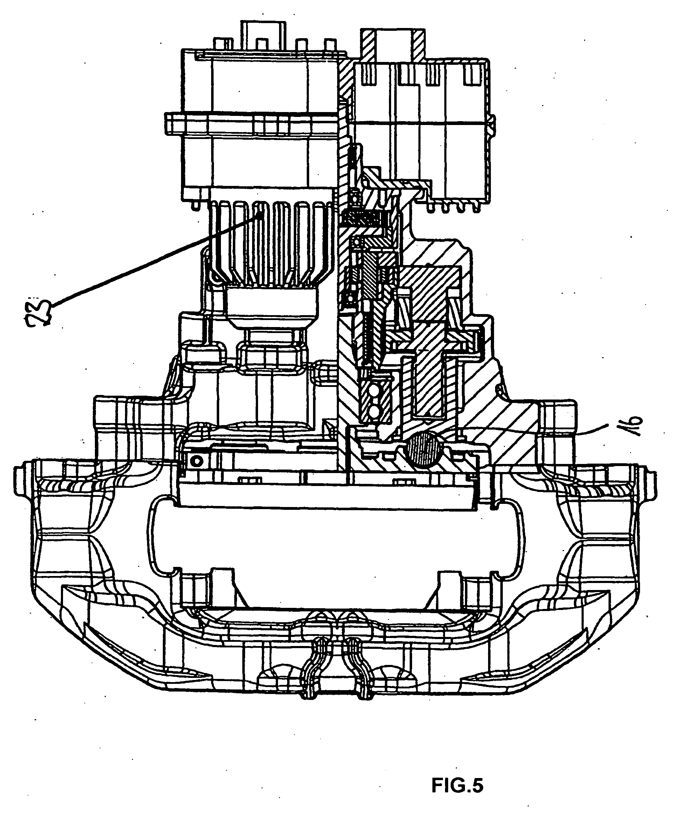

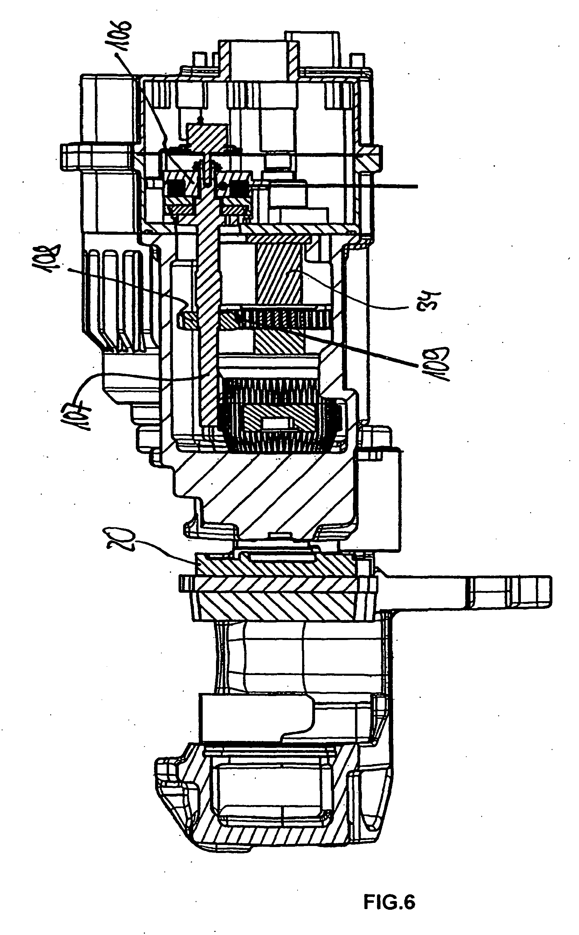

Die Bremse der Fig. 3 bis 6 weist ferner - wie in Fig. 6 zu erkennen - eine Einrichtung zum Blockieren der Drehung der Kurbel auf.

Diese Blockiereinrichtung wird nach Fig. 6 durch eine Magnethaltebremse 106 realisiert, die dazu ausgelegt ist, die Drehung einer Welle 107 freizugeben oder zu blockieren, die parallel zur Kurbel 34 angeordnet ist und die ein Zahnrad 108 trägt, das mit einer Außenverzahnung 109 auf der Kurbel kämmt.

Eine vorteilhafte Voraussetzung ist das selbsttätige Umsteuern von Kurbelantrieb (Betriebsbremsantrieb - Vorwärtsfahrt) auf Spindelantrieb. (Betriebsbremsantrieb - Rückwärtsfahrt sowie Parkbremse). Dies wird mit der Blockiereinrichtung realisiert, die sich zu Nutze macht, dass die Bremsstempel aus Spindel 12 und Mutter 13 selbsthemmend ausgelegt sind, während die Getriebeverbindung vom Elektromotor zur Kurbel 34 nichtselbsthemmend ausgelegt ist.

Die Auslegung ist insgesamt derart, dass bei nicht aktivierter Blockiereinrichtung bei Drehungen des Elektromotors die Kurbel 34 gedreht wird, während bei aktivierter Blockiereinrichtung die Spindel drehen, wenn sich der Elektromotor dreht.

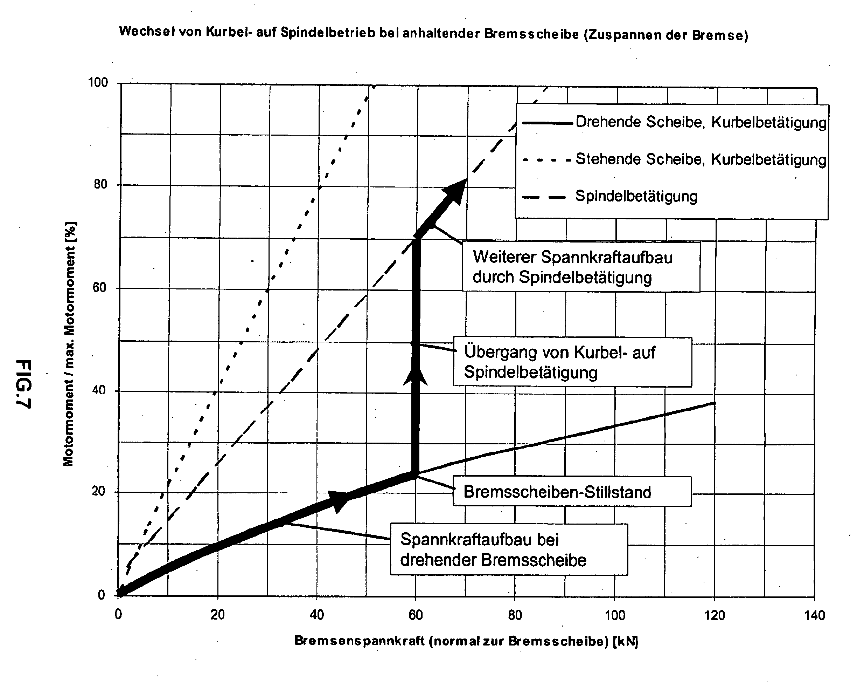

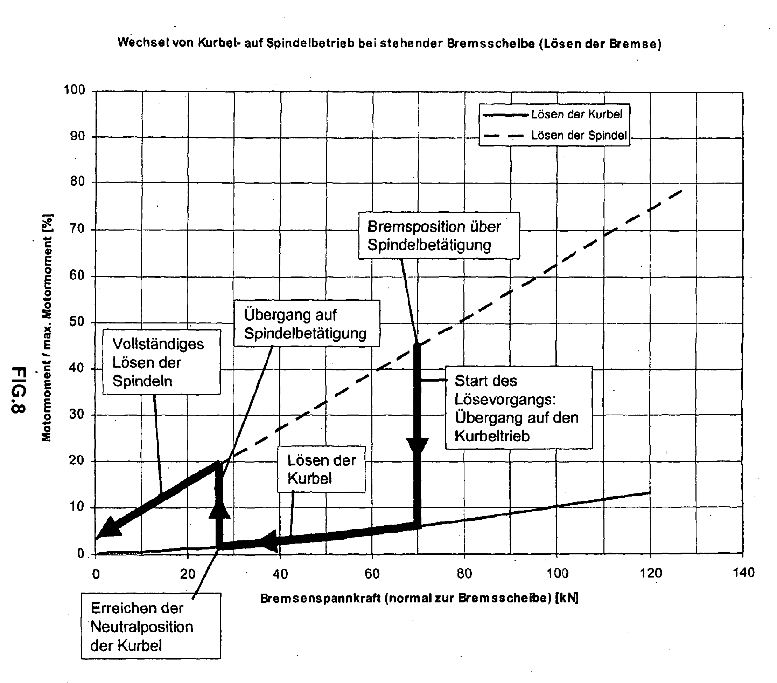

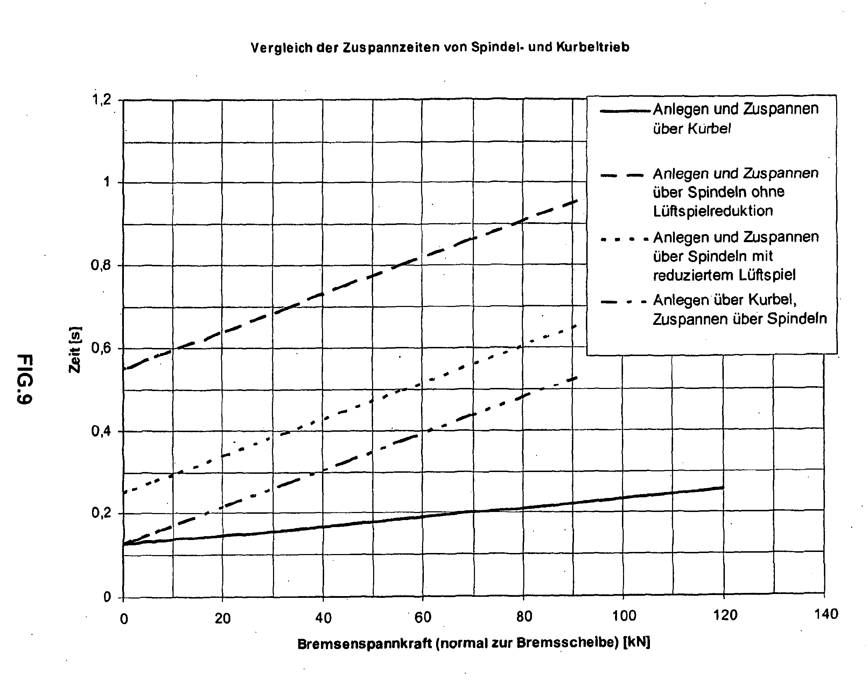

Derart sind insbesondere die eingangs erörterten Betriebsarten realisierbar. Fig. 7 veranschaulicht den Wechsel vom Kurbel- auf einen Spindelbetrieb bei anhaltender Bremsscheibe (Zuspannen der Bremse). Fig. 8 veranschaulicht einen Wechsel von einem Kurbel- auf einen Spindelbetrieb bei stehender Bremsscheibe (Lösen der Bremse) und Fig. 9 vergleicht die Zuspannzeiten des Spindel- und Kurbelbetriebes miteinander.

## Patentansprüche

1. Scheibenbremse in selbstverstärkender Bauart, mit elektrischem Aktuator, bei der eine vom Aktuator aufgebrachte Betätigungskraft mit Hilfe einer zwischen Aktuator und Bremsbelag angeordneten Selbstverstärkungseinrichtung verstärkt wird, mit folgenden Merkmalen:
a) eine Zuspanneinheit zum Zuspannen wenigstens einer Bremsbelageinheit (20) einseits einer Bremsscheibe (2) unter Durchführung einer Zuspannbewegung der Bremsbelageinheit (20) zur Bremsscheibe (2), die in wenigstens eine parallel und wenigstens eine relativ zur Bremsscheibendrehachse (BA) tangential verlaufende Bewegungskomponente (Richtung U) zerlegbar ist,
b) wenigstens einem elektromotorischen Antrieb (23) als Aktuator zum Betätigen der Zuspanneinheit,
c) wobei die Zuspanneinheit ein verzweigendes Getriebe (24) aufweist, das zwei Abtriebszweige aufweist, wobei der erste Abtriebszweig mit einer ersten Zuspannvorrichtung - insbesondere als Betriebsbremszuspannvorrichtung - und der zweite Abtriebszweig mit einer zweiten Zuspannvorrichtung (5. 6) - insbesondere als Parkbrems- und Nachstellvorrichtung - in Wirkverbindung steht,
d) wobei die zweite Zuspannvorrichtung wenigstens einen oder mehrere axial längenveränderliche Bremsstempel (Nachstellkolben 5, 6) aufweist, wobei zwischen den Druckflächen der Bremstempel und den Bremsbelageinheit wenigstens ein Rollkörper (16) angeordnet ist, der dazu ausgelegt ist, lediglich bei Bremsungen in Vorwärtsfahrtrichtung an einer Rampen- bzw. Keilkontur an den Bremsstempeln und/oder der Bremsbelageinheit aufzulaufen, und wobei die Bremsstempel (5, 6) jeweils eine mit einem Außengewinde versehene, drehbare Spindel (12) aufweisen, auf der eine längsverschiebliche Mutter (13) mit einem korrespondierenden Innengewinde angeordnet ist,
**dadurch gekennzeichnet, dass**
e) der Antriebsstrang zwischen dem verzweigenden Getriebe (24) und der Bremsbelageinheit (20) über die ersten Zuspannvorrichtung (34, 35, 36) nicht selbsthemmend ausgelegt ist und dass der Abtriebsstrang zwischen dem verzweigenden Getriebe (20) und der Bremsbelageinheit über die zweite Zuspannvorrichtung (5, 6) selbsthemmend ausgelegt ist.

2. Scheibenbremse nach Anspruch 1, **dadurch gekennzeichnet, dass** der Kurbeltrieb nicht selbsthemmend ausgelegt ist.

3. Scheibenbremse nach einem der vorstehenden Ansprüche, **dadurch gekennzeichnet, dass** ein Gewinde zwischen der Spindel (12) und der Mutter selbsthemmend ausgelegt ist.

4. Scheibenbremse nach einem der vorstehenden Ansprüche, **dadurch gekennzeichnet, dass** die Zuspanneinheit ferner derart ausgelegt ist, dass sie bei Bremsungen in Vorwärts- und Rückwärtsfahrtrichtung zwischen der ersten und der zweiten Zuspannvorrichtung vorzugsweise selbsttätig oder gesteuert umschaltbar ist, und durch eine Auslegung des Getriebes (214) und der ersten und zweiten Zuspannvorrichtung derart, dass die Drehrichtung des Elektromotors (23) bei Bremsungen in Vorwärts- und Rückwärtsrichtung vorzugsweise gleich ist.

5. Scheibenbremse nach einem der vorstehenden Ansprüche, **dadurch gekennzeichnet, dass** das verzweigende Getriebe (24) ein Planetengetriebe ist.

6. Scheibenbremse nach einem der vorstehenden Ansprüche, **gekennzeichnet durch** eine Umschalteinrichtung zum Umschalten zwischen einer Zuspannung der Bremsbeklageinheit über die erste oder die zweite Zuspanneinrichtung.

7. Scheibenbremse nach einem der vorstehenden Ansprüche, **dadurch gekennzeichnet, dass** die Umschalteinrichtung als Blockiereinrichtung zum Blockieren von Drehungen des Kurbeltriebs (34, 35, 36) ausgelegt ist.

8. Scheibenbremse nach einem der vorstehenden Ansprüche, **dadurch gekennzeichnet, dass** der Elektromotor (23) direkt oder über wenigstens eines oder mehrere Getriebe (24, 26, 37) die Kurbel (34) dreht, die einen Kurbelzapfen (35) aufweist, der zur Bewegung der Bremsbelageinheit tangential zur Bremsscheibe, d.h. parallel zur Bremsscheibenreibfläche, dient.

9. Scheibenbremse nach einem der vorstehenden Ansprüche, **dadurch gekennzeichnet, dass** die Bremsbelageinheit die Druckplatte (18) aufweist, die an der Bremsbelagträgerplatte (19) eines Bremsbelages (20) anliegt.

10. Scheibenbremse nach einem der vorstehenden Ansprüche, **dadurch gekennzeichnet, dass** der Kurbelzapfen (35) sich parallel zur Bremsscheibenachse (BA) erstreckt und in eine korrespondierend ausgerichtete Öffnung in der Druckplatte (18) eingreift.

11. Verfahren zum Ansteuern einer selbstverstärkenden Bremse nach einem der vorstehenden Ansprüche, **dadurch gekennzeichnet, dass** bei Einleitung einer Parkbremsung ohne vorhergehende Betriebsbremsung folgende Schritte durchlaufen werden:
a. die Blockiereinrichtung, insbesondere die Magnethaltebremse, wird durch das Bremssystem aktiviert und blockiert den Kurbelantrieb,
b. der Elektromotor wird in Zuspanndrehrichtung entsprechend Vorwärtsfahrt angesteuert,
c. die Spindeln werden bis zum Erreichen einer geforderten Spannkraft betätigt,
d. die Blockiereinrichtung, insbesondere die Magnethaltebremse, wird durch das Bremssystem gelöst,
e. das Halten der Parkbremse erfolgt stromlos über die selbsthemmende Wirkung der Gewindespindeln.

12. Verfahren nach Anspruch 11, **dadurch gekennzeichnet, dass** ein Lösen der Parkbremse wie folgt realisiert wird:
a) die Blockiereinrichtung, insbesondere die Magnethaltebremse, wird durch das Bremssystem aktiviert und blockiert den Kurbeltrieb;
b) der Elektromotor wird in Lösedrehrichtung angesteuert.
c) die Bremsstempel mit Spindel und Mutter werden in die Ausgangsstellung zurückgedreht
d) die Blockiereinrichtung, insbesondere die Magnethaltebremse, wird durch das Bremssystem gelöst.

13. Verfahren nach einem der vorstehenden Ansprüche 11 oder 12, **dadurch gekennzeichnet, dass** bei Einleitung einer Parkbremsung nach vorheriger Betriebsbremsung und gehaltener Betriebsbremsstellung folgende Schritte durchlaufen werden, nachdem der Fahrer einen Parkbremswunsch vorgegeben hat:
a) die Blockiereinrichtung, insbesondere die Magnethaltebremse, wird durch das Bremssystem aktiviert und blockiert den Kurbeltrieb;
b) der Elektromotor wird in Zuspanndrehrichtung entsprechend Vorwärtsfahrt angesteuert;
c) die Bremsstempel mit Spindel und Mutter werden bis zum Erreichen einer vorgegebenen Teilspannkraft und/oder um eine bestimmte Anzahl von Motorumdrehungen betätigt; und
d) die Blockiereinrichtung, insbesondere die Magnethaltebremse, wird gelöst;
e) der Elektromotor wird in Löserichtung angesteuert;
f) die Kurbel wird bis zum Erreichen einer bestimmten Spannkraftminderung und/oder um eine bestimmte Anzahl von Motorumdrehungen zurückgedreht;
g) Der Vorgang a) bis f) wird nun solange wiederholt bis die Kurbel ihre Neutralposition erreicht hat, dann erfolgt der weitere Ablauf wie für den Parkbremsvorgang ohne vorherige Betriebsbremsung beschrieben.

14. Verfahren nach einem der vorstehenden Ansprüche 11 bis 13, **dadurch gekennzeichnet, dass** bei einem mehrachsigen Fahrzeug der Übergang von Betriebsbremse auf Parkbremse vorteilhaft so ausgeführt werden, dass einzelne Bremsen bzw. die Bremsen einzelner Achsen die beschriebenen Schritte versetzt zueinander ausführen.

## Claims

1. Disc brake of the self-energising type, with an electric actuator, wherein an operating force applied by said actuator is amplified by means of a self-energising device disposed between said actuator and the brake lining, presenting the following features:
a) a brake application unit for applying at least one brake lining unit (20) on one side of a brake disc (2), thus carrying out a movement of application of said brake lining unit (20), towards said brake disc (2), with the brake application movement being adapted to be decomposed into at least one component of movement extending in parallel and into at least one component of movement (direction U) tangentially extending relative to the axis of revolution of the brake disc (BA),
b) at least one electromotor drive system (23) as actuator for operating said brake application device,
c) wherein said brake application device comprises a branching transmission mechanism (24) including two output branches, whereof the first output branch is functionally connected to a first brake application means - in particular as service brake application means - whereas the second output branch is functionally connected to a second brake application means (5, 6) - in particular as parking-brake application and readjusting means,
(d) wherein said second brake application means comprises one or several braking pistons variable in terms of their axial length (readjusting pistons 5, 6), with at least one rolling element (16) being disposed between the pressing areas of said braking pistons and said brake lining unit, which is designed for running up a ramp-shaped or wedged-shaped contour on said braking pistons and/or of said brake lining unit only in the case of brake application in the direction of forward movement, and wherein each of said braking pistons (5, 6) comprises a respective rotatable spindle (12) provided with an external screw thread, on which is disposed a spindle with a nut (13) having a corresponding internal screw thread, which is displaceable along the longitudinal axis,
**characterized in**
e) **that** the input power train between said branching transmission mechanism (24) and said brake lining unit (20) is designed for a non-self-energising operation via said first brake application means (34, 35, 36) and in that the output power train between said branching transmission mechanism (20) and said brake lining unit is so designed that it is self-energising via said second brake application means (5, 6).

2. Disc brake according to Claim 1, **characterized in that** the crank mechanism is not designed for self-locking operation.

3. Disc brake according to any of the preceding Claims, **characterized in that** a screw thread between said spindle (12) and said nut is designed for self-locking operation.

4. Disc brake according to any of the preceding Claims, **characterized in that** said brake application means is moreover designed for change-over, preferably for automatic or controlled change-over, in the case of brake application operations in the directions of forward and reverse movement, and that the transmission mechanism (214) as well as first and second brake application means are so designed that the sense of rotation of said electric motor (23) is preferably the same as that in case of brake application cycles in the directions of forward and reverse movement.

5. Disc brake according to any of the preceding Claims, **characterized in that** said branching transmission mechanism (24) is a planetary gear mechanism.

6. Disc brake according to any of the preceding Claims, **characterised by** a change-over means for changing over between modes of operation of brake lining unit application via said first or via said second brake application means.

7. Disc brake according to any of the preceding Claims, **characterized in that** said change-over means is designed in the form of a locking means for locking the revolutions of said crank mechanism (34, 35, 36).

8. Disc brake according to any of the preceding Claims, **characterized in that** said electric motor induces the rotation of said crank (34) directly or via at least one or several gear mechanisms (24, 26, 37), with this crank comprising a crank pin (35) serving to move said brake lining unit tangentially relative to the brake disc, i.e. in parallel with the friction area of the brake disc.

9. Disc brake according to any of the preceding Claims, **characterized in that** said brake lining unit comprises the brake application plate (18) bearing against the brake lining support plate (19) of a brake lining (20).

10. Disc brake according to any of the preceding Claims, **characterized in that** said crank pin (35) extends in parallel with the axis of the brake disc (BA) and is engaged in an opening of corresponding orientation in said brake application plate (18).

11. Method of controlling a self-energising brake according to any of the preceding Claims, **characterized in that** when a parking brake application cycle is started, without preceding application of the service brake, the following steps are carried out :
(a) the locking means, in particular the magnetic holding brake, is activated by the braking system and locks the crank mechanism,
(b) the electric motor is controlled to run in the sense of revolution corresponding to the forward-driving movement,
(c) the spindles are controlled until the required brake application force has been reached,
(d) the locking means, in particular the magnetic holding brake, is released by the braking system,
(e) the parking brake is maintained in the applied state without current by means of the self-locking function of said threaded spindles.

12. Method according to Claim 11, **characterized in that** the parking brake is released by the following operations:
(a) the locking means, in particular the magnetic holding brake, is activated by the braking system, with the crank mechanism being blocked;
(b) the electric motor is controlled to run in the direction corresponding to brake release,
(c) the braking pistons with spindle and nut are rotated and returned into the initial position,
(d) the locking means, in particular the magnetic holding brake, is released by the braking system.

13. Method according to any of the preceding Claims 11 or 12, **characterized in that** in the beginning of a parking brake application operation, after a preceding operation of service brake application, and with the service brake position being maintained, the following steps of operation are carried out after the driver has specified his wish to apply the parking brake :
(a) the locking means, in particular the magnetic holding brake, is activated by the braking system, with the crank mechanism being blocked ;
(b) the electric motor is controlled to run in a sense of revolution corresponding to forward movement;
(c) the braking pistons with spindle and nut are controlled until a predetermined partial braking force level has been reached and/or by a defined number of revolutions of the motor, and
(d) the locking means, in particular the magnetic holding brake, is released;
(e) the electric motor is controlled to turn in the sense for release ;
(f) the crank is rotated and returned until a defined reduction of the braking force has been reached and/or by a defined number of revolutions of the motor;
(e) the sequence of the steps (a) to (f) is repeated until the crank has reached its neutral position, whereupon the sequence of operations is carried in the same manner as that described for application of the parking brake without preceding service brake application.

14. Method according to any of the preceding Claims 11 to 13, **characterized in that** with a vehicle having several axles, the transition from the service brake to the parking brake is carried in an expedient manner in such a way that individual brakes or the brakes on individual axles carry out the above-described steps with an offset relative to each other.

## Revendications

1. Frein à disque en conception à renfort automatique, à un acteur électrique, dans lequel un effort d'actionnement appliqué par ledit acteur est renforcé moyennant un dispositif de renfort automatique disposé entre ledit acteur et la garniture de frein, présentant les caractéristiques suivantes :
a) une unité de serrage à serrer au moins une unité à garniture de frein (20) d'un côté d'un disque de frein (2), en réalisant un mouvement de serrage de ladite unité à garniture de frein (20) vers ledit disque de frein (2), au mouvement de serrage de frein étant apte à être décomposé en au moins un composant de mouvement s'étendant en parallèle et en au moins un composant de mouvement (direction U) s'étendant tangentiellement relativement à l'axe de révolution du disque de frein (BA),
b) au moins un moyen d'entraînement électromoteur (23) en tant que l'acteur à actionner ledit dispositif de serrage de frein,
c) dans lequel ledit dispositif de serrage de frein comprend un mécanisme de transmission ramifiant (24) comprenant deux branches de sortie, dont la première branche de sortie se trouve en connexion de travail avec un premier dispositif de serrage - en particulier en tant que dispositif de serrage de frein de service - pendant que la deuxième branche de sortie se trouve en connexion de travail avec un deuxième dispositif de serrage (5, 6) - en particulier en tant que dispositif de freinage de stationnement et de réajustage,
(d) dans lequel ledit deuxième dispositif de serrage comprend un ou plusieurs pistons de frein à longueur axiale variable (pistons de réajustage 5, 6), à au moins un corps de roulement (16) étant disposé entre les aires de pression desdits pistons de frein et ladite unité à garniture de frein, qui est conçu à la fin qu'il ne monte le long d'un contour en rampe ou respectivement en coin auxdits pistons de frein et/ou de ladite unité à garniture de frein qu'au cas de serrage de frein en direction de marche en avant, et dans lequel chacun desdits pistons de frein (5, 6) comprend une broche rotative respective (12) pourvue d'un filetage extérieur, sur laquelle broche est disposé un écrou (13) déplaçable en sens longitudinal, à un filetage correspondant intérieur,
**caractérisé en ce**
e) **que** la ligne de commande entre ledit mécanisme de transmission ramifiant (24) et ladite unité à garniture de frein (20) via ledit premier dispositif de serrage (34, 35, 36) est conçu d'une façon non autobloquant et en ce que la ligne de commande de sortie entre ledit mécanisme de transmission ramifiant (20) et ladite unité à garniture de frein via ledit deuxième dispositif de serrage (5, 6) est conçu de façon à être autobloquant.

2. Frein à disque selon la revendication 1, **caractérisé en ce que** le mécanisme à bielle et manivelle est conçu de façon non autobloquant.

3. Frein à disque selon une quelconque des revendications précédentes, **caractérisé en ce qu'**un filetage est formé à blocage automatique entre ladite broche (12) et ledit écrou.

4. Frein à disque selon une quelconque des revendications précédentes, **caractérisé en ce que** ledit dispositif de serrage est au plus conçu d'une façon, qu'il soit commutable, de préférence automatiquement ou sous commande, au cas des actions de serrage en sens de marche en avant et de marche arrière, et **en ce que** le mécanisme de transmission (214) ainsi que desdits premier et deuxième dispositifs de serrage sont conçus d'une telle façon, que le sens de révolution dudit moteur électrique (23) soit le même, de préférence, au cas des actions de serrage en sens de marche en avant et de marche arrière.

5. Frein à disque selon une quelconque des revendications précédentes, **caractérisé en ce que** le dit mécanisme de transmission ramifiant (24) est une boîte à engrenages planétaires.

6. Frein à disque selon une quelconque des revendications précédentes, **caractérisé par** un moyen commutateur à commuter entre une action de serrage de ladite unité à garniture de frein via ledit premier ou via ledit deuxième dispositif de serrage.

7. Frein à disque selon une quelconque des revendications précédentes, **caractérisé en ce que** ledit moyen commutateur est conçu sous forme d'un moyen de blocage à bloquer des révolutions dudit mécanisme à bielle et manivelle (34, 35, 36).

8. Frein à disque selon une quelconque des revendications précédentes, **caractérisé en ce que** ledit moteur électrique (23) cause la rotation de ladite manivelle (34) directement ou via au moins un ou plusieurs engrenages (24, 26, 37), cette manivelle comprenant un maneton de vilebrequin (35) servant à mouvoir ladite unité à garniture de frein tangentiellement au disque de frein, c'est-à-dire en parallèle à l'aire de friction du disque de frein.

9. Frein à disque selon une quelconque des revendications précédentes, **caractérisé en ce que** ladite unité à garniture de frein comprend la plaque de serrage (18) portant contre la plaque d'appui de la garniture de frein (19) d'une garniture de frein (20).

10. Frein à disque selon une quelconque des revendications précédentes, **caractérisé en ce que** ledit maneton de vilebrequin (35) s'étend en parallèle à l'axe du disque de frein (BA) et se trouve en prise dans une ouverture à orientation correspondante dans ladite plaque de serrage (18).

11. Procédé à commander un frein à renfort automatique selon une quelconque des revendications précédentes, **caractérisé en ce qu'**au début d'une action de freinage de stationnement, sans serrage du frein de service précédent, les étapes suivantes sont réalisées :
a) le moyen de blocage, en particulier le frein de retenue magnétique, est activé par le système de freinage, en bloquant le mécanisme à bielle et manivelle,
b) le moteur électrique est commandé en sens de révolution de serrage en correspondance avec la marche en avant,
c) les broches sont commandées jusqu'à l'effort de serrage requis est atteint,
d) le moyen de blocage, en particulier le frein de retenue magnétique, est desserré par le système de freinage,
e) l'arrêt du frein de stationnement se fait sans courant moyennant l'effet autobloquant desdites broches filetées.

12. Procédé selon la revendication 11, **caractérisé en ce que** le desserrage du frein de stationnement se réalise de la manière suivante :
a) le moyen de blocage, en particulier le frein de retenue magnétique, est activé par le système de freinage, en bloquant le mécanisme à bielle et manivelle ;
b) le moteur électrique est commandé en sens de révolution de desserrage,
c) les pistons de frein à broche et écrou sont tournés en retour dans la position de départ,
d) le moyen de blocage, en particulier le frein de retenue magnétique, est desserré par le système de freinage.

13. Procédé selon une quelconque des revendications précédentes 11 ou 12, **caractérisé en ce qu'**au début d'une action de freinage de stationnement, après une action de serrage du frein de service précédent et à position de frein de service arrêté, les étapes suivantes sont réalisées après la détermination d'une commande de freinage de stationnement par le conducteur:
a) le moyen de blocage, en particulier le frein de retenue magnétique, est activé par le système de freinage, en bloquant le mécanisme à bielle et manivelle ;
b) le moteur électrique est commandé en sens de révolution de serrage en correspondance avec la marche en avant ;
c) les pistons de frein à broche et écrou sont commandées jusqu'à un effort de serrage partiel prédéterminé est atteint et/ou par un nombre défini des révolutions du moteur ; et,
d) le moyen de blocage, en particulier le frein de retenue magnétique, est desserré ;
e) le moteur électrique est commandé en sens de desserrage ;
f) la manivelle est retourné jusqu'à un niveau défini de réduction de l'effort de serrage est atteint et/ou par un nombre défini des révolutions du moteur ;
e) la suite des étapes a) à f) est répétée jusqu'à ce que la manivelle ait atteint sa position neutre, après quoi la suite des opérations est réalisée de la même manière que celle décrite pour le serrage du frein de stationnement sans serrage du frein de service précédent.

14. Procédé selon une quelconque des revendications précédentes 11 à 13, **caractérisé en ce qu'**au cas d'un véhicule à plusieurs essieux, la transition du frein de service au frein de stationnement est réalisé d'une manière si avantageuse, que des freins individuels ou respectivement les freins des essieux individuels réalisent les étapes décrites en temps différé l'un relativement à l'autre.
